**Europäisches Patentamt**

**European Patent Office**

**Office européen des brevets**

(19)

(11) Publication number : **0 453 860 B1**

(12) # EUROPEAN PATENT SPECIFICATION

(45) Date of publication of patent specification :
**29.06.94 Bulletin 94/26**

(51) Int. Cl.$^5$ : **A23L 3/3463,** A23L 3/3571

(21) Application number : **91105575.4**

(22) Date of filing : **09.04.91**

(54) A method of killing gram negative bacteria.

(30) Priority : **20.04.90 US 511573**
**29.06.90 US 545939**
**25.02.91 US 657827**

(43) Date of publication of application :
**30.10.91 Bulletin 91/44**

(45) Publication of the grant of the patent :
**29.06.94 Bulletin 94/26**

(84) Designated Contracting States :
**AT BE CH DE DK ES FR GB GR IT LI LU NL SE**

(56) References cited :
**EP-A- 0 374 823**
**WO-A-89/12399**
**WO-A-90/09739**
**PATENT ABSTRACTS OF JAPAN vol. 8, no.**
**130 (C-229)(1567), 16 June 1984; & JP - A -**
**5942322 (MEIJI NIYUUGIYOU K.K.) 08.03.1984**

(73) Proprietor : **HAARMANN & REIMER CORP.**
**70 Diamond Road,**
**P.O.Box 175**
**Springfield, New Jersey 07081 (US)**

(72) Inventor : **Baum, John Michael**
**55785 Willowbend Boulevard**
**Bristol, Indiana 46507 (US)**
Inventor : **Bycroft, Nancy L.**
**66387 Maple Street**
**Constantine, Michigan 49042 (US)**

(74) Representative : **Petrovicki, Wolfgang, Dr. et al**
**Bayer AG**
**Konzernverwaltung RP**
**Patente Konzern**
**D-51368 Leverkusen 1 (Bayerwerk) (DE)**

EP 0 453 860 B1

## Description

### Field of the Invention

The invention relates to a method of killing Gram negative bacteria with antimicrobials containing a lanthionine bridge. In particular the invention relates to the use of nisin against Gram negative food-borne pathogens such as Salmonella and Shigella and Gram negative food spoilage organisms such as Pseudomonas.

### Background of the Invention

Lantibiotics are a class of bacteriocins obtained from lactic acid bacteria which include nisin, epidermin, gallidermin, subtilin, Pep-5, cinnamycin, duramycin and ancovenin. It is generally recognized that nisin is effective against Gram positive organisms and much of the work with lantibiotics to date has been centered on the efficacy of nisin against Clostridium. Rayman et al., Applied and Environmental Microbiology, Feb. 1981, p. 375-380, disclosed that no obvious growth of C. sporogenes occurred in nisin-treated slurries up to pH 6.5. However, in a slurry adjusted to pH 6.6, the preservative effect of nisin was lost. F. Rejas Garcia, Anales de la Facultad de Veterinaria de Leon, Vol. 5, 1959, 171-178, disclosed that nisin and between 1 and 3% disodium phosphate in solution had a synergistic effect against C. butyricum.

However, although nisin has a known inhibitory effect on Gram positive bacteria such as Clostridium, Listeria monocytogenes, Staphylococcus aureus and Streptococcus lactis (now known as Lactococcus lactis), it has generally been reported to be ineffective against Gram negative bacteria.

One apparent report of efficacy against a Gram negative organism is found in Rayman and Hurst (Biotechnology of Industrial Antibiotics, Chapter 21, pg. 618, Ed., E. Vandamme, 1984, Marcel Dekker, Inc., New York and Basel). Rayman and Hurst cited Mattick and Hirsch as finding inhibition by nisin against three strains of Neisseria, a Gram negative bacterium. However, although the referenced article (Mattick and Hirsch, Lancet, July 5, 1947, 5-8) lists "neisseria" as a pathogenic organism which was susceptible to nisin in vitro, within the same paragraph (top of page 6) it is also stated that: "None of the Gram negative organisms so far tested is susceptible."

AU 49413/85 discloses plate diffusion tests of epidermin and nisin which show that both compounds inhibited the growth of the Gram negative organisms, Proteus mirabilis and Proteus vulgaris.

WO 8912399 discloses that the use of nisin as a food preservative has been hampered by the belief that nisin was ineffective against Gram negative and many Gram positive bacteria. The specification states that enhanced, broad range bactericidal activity against Gram negative bacteria as well as enhanced activity against a broader range of Gram positive bacteria than can be obtained with nisin alone, is found with compositions containing nisin in combination with non-bactericidal agents, for example chelating agents or surfactants. The disclosure includes data which show reductions of viable bacteria with the addition of nisin alone at pH 5 and at pH 8.

### Summary of the Invention

The invention described herein shows that antimicrobials containing a lanthionine bridge, in particular nisin or fragments thereof, are indeed effective antimicrobials against Gram negative organisms when used in an environment having a pH between 5.5 and 6.5. Within this pH range, nisin alone is an effective bactericidal agent against Gram negative food-borne pathogens and Gram negative food spoilage organisms. Commercial preparations of nisin may be used if impurities commonly present, sodium chloride and water insoluble components, are removed. A nisin preparation may then be used as a surface treatment in solution or as a dry composition or may be formulated as a tablet for dissolution in liquids susceptible to contamination. A preferred composition includes a buffer component capable of providing the suitable pH when dissolved in an aqueous environment.

The method may be used with food processing equipment, poultry processing, water, beverages and food products. Particularly important is the use of nisin against food-borne Gram negative bacteria such as Salmonella and Shigella.

### Description of the Preferred Embodiments

When working with antimicrobial systems against Gram negative organisms, one of the controls run was nisin which had been obtained by removing the diluents present in a commercial preparation obtained from Sigma Chemical Corp. (P.O. Box 14508, St. Louis, MO 63178-9916). It was noticed that, contrary to general

2

literature on the antimicrobial spectrum of nisin, the control showed activity against Salmonella. This finding is particularly important in the food area because nisin is a food approved antimicrobial and Gram negative food pathogens such as Salmonella are problems in food systems and food processing plants.

It has now been found that within a defined pH range, nisin is an effective antimicrobial against Gram negative organisms without the addition of agents such as chelators or surfactants. It is expected that similar results would be obtained from other antimicrobials in the lantibiotic class and from fragments of such lantibiotics containing a lanthionine bridge. Lantibiotics are defined herein as polypeptides containing between 3 and 50 amino acids, preferably 8 to 34, and including one or more lanthionine bridges. Nisin is the best known representative of the class. Also included are epidermin, gallidermin, subtilin and PEP-5. Fragments of lantibiotics, such as nisin, containing a lanthionine bridge, and functionally equivalent analogues which may differ in precise amino acids are considered equivalent to the lantibiotics used in the method of this invention. In particular, fragments or analogues of nisin containing the lanthionine bridge are considered equivalent providing that such fragments or analogues exhibit effective antimicrobial activity against Gram negative food-borne pathogens.

NISAPLIN from Aplin and Barrett and the nisin preparation from Sigma Chemical Co. are labeled as containing milk proteins and sodium chloride as diluents. Such preparations are ineffective against Salmonella. It has now been found that when impurities are removed from such preparations, nisin is bactericidal against Gram negative food-borne pathogens and Gram negative food spoilage organisms. Included in these classes are Salmonella typhimurium, Salmonella enteritidis, Shigella dysenteriae, Pseudomonas aeruginosa, Vibrio cholera, Klebsiella pneumoniae and E. coli. Several procedures will produce an antimicrobially effective nisin preparation from the commercial preparations. The simplest procedure is standard dialysis to remove salt, followed by centrifugation to remove water insoluble components. This procedure and an ultrafiltration procedure are discussed in the Examples. In addition, high pressure liquid chromatography may be used.

Although preparations of different activity may be obtained with these different procedures (and indeed, preparations of different activity may be obtained using the same procedures on different occasions), each preparation may be used to prepare a dry composition or a solution containing an effective activity of purified nisin per milliliter of treatment solution (IU/mL), which may be used to kill Gram negative food-borne pathogens or Gram negative food spoilage organisms. For example, when such preparations were used: 250 IU/mL provided a 3.9 log reduction against K. pneumoniae; 100 IU/mL provided a 4.5 log reduction and 50 IU/mL provided a 3.9 log reduction against S. enteritidis; 500 IU/mL provided a 3.2 log reduction against Pseudomonas; and 100 IU/mL provided a 3.2 log reduction against E. coli.

Although procedures for purification are provided, any procedure which eliminates sodium chloride and water insoluble impurities from a commercial preparation of nisin would provide useful preparations. Indeed, experiments with a preparation with an activity of 37,000,000 IU/gm which is sold as an assay standard, to which the diluents found in the commercial preparation had not been added, showed similar activity against Gram negative bacteria as preparations purified by the procedures given herein. (Activity was determined by bioassay. In some cases HPLC profiles were used.)

Treatment

A composition consisting essentially of a lantibiotic obtained from a preparation essentially devoid of sodium chloride and water insoluble components may be used directly in an environment suspected of contamination if the environment is inherently within the pH range of 5.5 to 6.5. Preferably a buffer component is added which is capable of providing the desired pH range when dissolved in the aqueous microenvironment in which the suspected contaminants are likely to multiply. The composition may also be prepared as a treatment solution consisting essentially of an aqueous solution having a pH between 5.5 and 6.5 which solution contains an effective amount of a lantibiotic to reduce the population of Gram negative organisms at least about three logarithms or to below detectable limits. The criterion of efficacy used herein is a three log reduction of Gram negative organisms over that shown by the control after one hour of exposure.

A suitable pH may be obtained by adjusting the pH of the treatment solution, applying or adding the aqueous treatment solution to an environment which inherently has the desired pH or by adding a buffer component capable of maintaining the pH in the desired range. A preferred pH is about 6.0. The buffer may be a phosphate buffer or others capable of maintaining a pH in the desired range. A preferred treatment solution contains at least about 500 IU nisin per mL in an aqueous solution containing a phosphate buffer capable of maintaining a pH of between 5.5 and 6.5. This activity should be effective against a wide range of Gram negative food-borne pathogens.

It has been found that 500 IU purified nisin per milliliter is rendered inactive against S. typhimurium if about 0.15 % sodium chloride and/or about 0.05% non-fat dried milk solids are added back to a treatment solution prepared from a purified preparation. The treatment solution should contain less than about 0.1% sodium chloride (i.e. less than about 0.1 gram sodium chloride per 100 mL treatment solution), and preferably less than about 0.05% sodium chloride. It is also preferred to remove insoluble materials from the nisin preparation prior to incorporation in the treatment solution.

Method of Use

The treatment composition or solution may be applied to surfaces suspected of contamination. The treatment solution may be applied by spraying or dipping or any other convenient method. A treatment may be used to formulate ice, which could then be used, for example, for the transport, storage and/or display of fish. A dry composition may be formulated as a tablet for dissolution in susceptible beverages, may be dusted on the surface of foods or may be mixed with dry food ingredients.

Since nisin is a food accepted antimicrobial it will be particularly useful in any application in which residual nisin may contact humans. Particularly important are the eradication of Salmonella in poultry processing and P. aeruginosa which is a water contaminant, and even more importantly a common hospital contaminant. This new use means that such Gram negative organisms may be eradicated without fear of creating a biological hazard. It may be used as a disinfectant for cleaning surfaces and cooking utensils in food processing plants and any area in which food is prepared or served such as hospitals, nursing homes, restaurants, especially fast food restaurants, delicatessens and the like. It may also be used as an antimicrobial on food products and would be particularly useful as a surface antimicrobial on cheeses, fresh produce such as fruits and vegetables and foods on salad bars and in delicatessens.

The following examples disclose preferred embodiments of the invention.

EXAMPLES

For purposes of comparison with other published work on nisin, please note that one gram of pure nisin has an activity of 40,000,000 IU and one gram of NISAPLIN® contains 1,000,000 IU or 2.5% nisin. Nisin from the Sigma Chemical Co. and NISAPLIN® from Aplin and Barrett are both sold as a preparations containing 2.5% nisin (0.025 gram nisin per gram preparation), and therefore 0.025 gram nisin has 1,000,000 International Units of activity per gram preparation (IU/g).

Confirmatory work was done on log phase organisms unless otherwise noted.

**Example 1** - Purification of Commercially Available Nisin.

Nisin obtained from Sigma was purified to remove impurities consisting primarily of sodium chloride and denatured milk solids.

Nisin was dissolved in water and the pH adjusted to 2.5 with hydrochloric acid. The solution was diafiltered to remove sodium chloride. The filtrate was heated to 80° C to precipitate the solids; a filter aid such as diatomaceous earth was added; and the filtrate was vacuum filtered to remove the precipitated milk solids. Optionally the pH of the filtrate may be adjusted to 6 before vacuum filtering to obtain even higher purity. Preparations obtained in either manner were bactericidal against Gram negative bacteria. The solution obtained contained purified nisin. The solution was assayed by the standard method and activity assigned in that way.

Nisin may also be purified by standard dialysis and centrifugation. Ten grams of NISAPLIN® in 50 mL water with the pH adjusted to 2.5 with hydrochloric acid was dialyzed at room temperature for twenty four hours against two liters of acidified distilled water (pH 2.5, changed twice) to remove salt. The solution was then centrifuged to remove the solids (believed to be milk solids) and the supernatant lyophylized. The resulting preparation had an activity of approximately five million units per milliliter. It was later used to prepared an antimicrobially effective treatment solution for use against Gram negative organisms.

**Example 2** - Preparation of Test Organisms

Growth Conditions:

S. typhimurium (ATCC 14028) was maintained on an agar medium containing Tryptic Soy Agar (Difco Labs). Stock agar slants were stored at 4°C. An overnight culture of S. typhimurium was prepared by inoculating a 250 mL flask containing 10 mL Nutrient Broth (Difco) with 1 loop of culture from the stock slant and incubating at 37°C with slow shaking at 25 rpm on a New Brunswick G24 shaker. The overnight grown culture was then used to inoculate fresh Nutrient Broth (1:20 inoculation level) in a 250 mL side arm flask. This flask was then incubated at 37°C, and agitated at 25 rpm until the culture reached a density of 100 units as measured using a Klett-Summerson colorimeter. This density corresponded to a viable cell count of approximately $3 \times 10^8$ cells per mL. All testing was done on cells at log phase growth unless otherwise indicated. Test cultures were prepared in a similar way with S. enteritidis (ATCC 13076), S. dysenteriae (ATCC 11456A), P. aeruginosa (ATCC 9027) and E. coli (ATCC 8739).

An appropriate amount of purified nisin to achieve the desired concentration (IU/mL), purified by ultrafiltration as described above, was added to 9.0 mL of 14.7 mM potassium phosphate adjusted to a pH of 3.6 with hydrochloric acid. One milliliter of culture, containing approximately $10^8$ cells per milliliter, was added to the nisin solution, providing a final volume of 10 mL. Incubation was continued at 37°C and samples were withdrawn at 10, 20, 40 and 60 minute intervals. Serial dilutions were carried out in Nutrient Broth and viable counts were obtained following growth of samples on nutrient agar broth plates with incubation at 37°C for 48 hours.

**Example 3** - Commercial Nisin Ineffective Against Salmonella.

Experiments with unpurified commercial preparations of nisin (Sigma) containing 20,000 International Units (IU) of activity per milliliter showed no cidal activity against $10^7$ S. typhimurium cells after 60 minutes of exposure while treatment with purified nisin at an activity of 2,000 IU/mL against the same concentration of cells showed a 1000 fold reduction. Confluent growth on the recovery plate was obtained when $10^6$ cells (1:10 dilution) from the commercial nisin treatment (20,000 IU/mL) and buffer control (0 IU/mL) were applied while only 300 colonies grew on the recovery plate after a similar treatment with 2,000 IU/mL of purified nisin. When $10^4$ cells (1:1000 dilution) were applied to the recovery plates after treatment, cells too numerous to count (discrete colonies, but too numerous to count) were observed with the commercial preparation and control, while only four colonies survived treatment with the purified preparation. When 18,000 IU of commercial nisin were added to 2,000 IU of the purified preparation to provide an activity of 20,000 IU per milliliter, confluent growth was again observed after 60 minutes of treatment exposure when $10^6$ microorganisms were applied to the recovery plate.

Additional experiments with lower amounts (500 IU/mL and 1000 IU/mL) of purified nisin versus commercial nisin preparations, showed similar results. The commercial preparation was ineffective against S. typhimurium, but the purified nisin showed cidal activity after 40 to 60 minutes when $10^4$ or $10^6$ cells were applied to the recovery plates.

Purified nisin at 20,000 IU/mL and 2,000 IU/mL was also effective in reducing the viable cell count of S. enteritidis against $10^7$ cells per milliliter after 20 to 30 minutes.

**Example 4** - Purified Nisin Against S. dysenteriae.

Stationary phase cells of S. dysenteriae were treated with 20,000 IU/mL of purified nisin and compared to growth from cells recovered from buffer without nisin. A cidal effect was seen after 10 minutes exposure with the application of $10^4$ (a 1:1000 dilution of treatment solution and cells) cells to the recovery plate. After 40 minutes of exposure, no growth was observed on the recovery plate. After 60 minutes, the application of $10^6$ cells to the recovery plate (1:10 dilution of treatment solution and cells), which produced confluent growth from the phosphate buffer control, showed a viable cell count of only 13, nearly a 100,000 fold reduction.

With log phase cells, 20,000 IU/mL purified nisin showed almost a complete kill after 10 minutes against $10^7$ cells per milliliter and complete kill (less than 10 CFU/mL) after 20 minutes.

**Example 5** - Purified Nisin Against P. aeruginosa.

Purified nisin at 20,000 IU/mL was tested as disclosed previously and found to eradicate P. aeruginosa after 60 minutes.

**Example 6** - Purified Nisin Against E. coli.

Purified nisin at 20,000 IU/mL was tested as disclosed previously and found to eradicate stationary phase E. coli after 60 minutes.

**Example 7** - Best Method to Determine Efficacy Against Salmonella.

The nisin used in examples 7, 8 and 9 was obtained from Aplin and Barrett, was a nisin standard which had an activity of 37,000,000 IU/gm and was not labeled as containing the diluents normally added to NISAPLIN. A 100,000 IU/mL stock was prepared in acidified water, pH 2.7, and frozen and stored at -70°C. The nisin stock was diluted 1:10 or 1:100 in treatment buffer prior to being added to the treatment systems.

Cells of S. typhimurium ATCC 14028 were grown overnight at 37°C in Tryptic Soy Broth (Difco). A 2% inoculum from the overnight culture was used to start a log phase culture. The log phase culture was selected for use in the experimental studies when the turbidity of the culture reached 100 units on a Klett-Summerson colorimeter. This was usually equivalent to 2-3 hours of incubation. Evaluations were performed in 14.7 mM potassium phosphate using a 10% inoculum. For pH values of 5.0 and greater, mixtures of the monobasic and dibasic salts were used. For pH values of 4.5 and below, the monobasic salt was adjusted with hydrochloric acid. The cells were washed one time in their homologous treatment buffer without nisin before inoculation.

Treatments were inoculated to provide approximately $10^7$ cells/mL and incubated for one or three hours at 37°C before samples were taken for cell enumeration. Serial ten-fold dilutions were made in phosphate buffered saline (PBS) by mixing 35 μL culture to 315 μL PBS in microtiter trays. The PBS consisted of 0.12% dibasic sodium phosphate, 0.022% monobasic sodium phosphate, and 0.85% sodium chloride, adjusted to pH 7.0 with hydrochloric acid. The cell number in 0.1 mL of selected dilutions was determined using standard pour plating techniques. Tryptic Soy Agar was used as the recovery medium. The plates were incubated at 37°C for 18-24 hours before the colony forming units were counted.

Plate counts taken of the washed cell buffer suspensions at the time of inoculation were used to determine the cell concentration in the treatments at Time 0.

The log reductions for the treatments containing nisin were compared to the buffer control (0 IU/mL nisin) after incubation. The log reduction for the buffer control was compared to the cell concentration at Time 0.

**Example 8** - Effect of pH.

Nisin concentrations ranging from 2,000 IU/mL to 1.0 IU/mL were tested in 14.7 mM potassium phosphate ranging in one pH unit increments from 3.5 to 7.5. The cells used for the inocula were washed in their homologous treatment buffer prior to inoculation. The results show a pH optimum between 5.5 and 6.5.

Additional studies on pH were run. A nisin concentration of 500 IU/mL was selected for these studies. One-half pH unit increments ranging from 4.5 to 7.5 were tested against washed cells in homologous treatment buffer. The results are shown in Table I. A five log reduction (100,000 fold) was observed at pH 6.0 at one hour. Four log (10,000 fold) reductions were found at pH values of 5.5 and 6.5.

## TABLE I

### Effect of pH on Nisin Efficacy Against Salmonella typhimurium ATCC 14028

| pH | IU/mL Nisin | One Hour | | Three Hours | |
|---|---|---|---|---|---|
| | | CFU/mL | Log10 Reduc. | CFU/mL | Log10 Reduc. |
| 4.5 | 500 | 3.8E+06 | 0.94 | 9.1E+05 | 1.49 |
| | 0 | 3.3E+07 | (0.06) | 2.8E+07 | 0.02 |
| | Time 0 | 2.9E+07 | ———— | 2.9E+07 | ———— |
| 5.0 | 500 | 3.0E+04 | 2.87 | 3.5E+03 | 3.65 |
| | 0 | 2.2E+07 | 0.29 | 1.5E+07 | 0.44 |
| | Time 0 | 4.3E+07 | ———— | 4.3E+07 | ———— |
| 5.5 | 500 | 1.3E+03 | 4.20 | 7.0E+01 | 5.28 |
| | 0 | 2.0E+07 | 0.31 | 1.3E+07 | 0.48 |
| | Time 0 | 4.1E+07 | ———— | 4.1E+07 | ———— |
| 6.0 | 500 | 3.5E+01 | 5.76 | 1.0E+01 | 6.30 |
| | 0 | 2.0E+07 | 0.33 | 2.0E+07 | 0.33 |
| | Time 0 | 4.3E+07 | ———— | 4.3E+07 | ———— |
| 6.5 | 500 | 5.9E+02 | 4.41 | 1.0E+01 | 6.36 |
| | 0 | 1.5E+07 | 0.56 | 2.3E+07 | 0.38 |
| | Time 0 | 5.5E+07 | ———— | 5.5E+07 | ———— |
| 7.0 | 500 | 6.4E+04 | 2.71 | 5.5E+03 | 3.70 |
| | 0 | 3.2E+07 | 0.21 | 2.8E+07 | 0.28 |
| | Time 0 | 5.3E+07 | ———— | 5.3E+07 | ———— |
| 7.5 | 500 | 7.0E+06 | 0.50 | 1.0E+06 | 1.35 |
| | 0 | 2.2E+07 | 0.29 | 2.3E+07 | 0.27 |
| | Time 0 | 4.3E+07 | ———— | 4.3E+07 | ———— |

A nisin concentration of 500 IU/mL is equivalent to 13.51 µg/mL.
The log reduction for 500 IU/mL nisin was compared to the 0 IU/mL control after incubation.
The log reduction for 0 IU/mL was compared to the cell concentration at Time 0.


Treatments were conducted in 14.7mM potassium phosphate buffer.
() = Increase.
Nisin activity was 3.7E+07 IU/gm.

**Example 9** - Effect of Nisin Concentration.

Nisin concentrations ranging from 2,000 IU/mL to 1.0 IU/mL were tested 14.7mM potassium phosphate buffer, pH 6.0. The results are given in Table II and show that greater than four log (10,000 fold) reductions were achieved at nisin concentrations of 250 IU/mL and greater.

## TABLE II

### Effect of Nisin Concentration on Activity Against <u>Salmonella</u> <u>typhimurium</u> ATCC 14028 In Potassium Phosphate Buffer at pH 6.0

| Nisin Concentration | | One Hour Incubation | | Three Hour Incubation | |
|---|---|---|---|---|---|
| (IU/mL) | (µg/mL) | CFU/mL | Log 10 Reduc. | CFU/mL | Log 10 Reduc. |
| 2000 | 54.05 | 1.0E+01 | 6.53 | 1.0E+01 | 6.67 |
| 1000 | 27.03 | 1.0E+01 | 6.53 | 1.0E+01 | 6.67 |
| 500 | 13.51 | 1.0E+01 | 6.53 | 1.0E+01 | 6.67 |
| 250 | 6.76 | 9.2E+02 | 4.56 | 1.2E+02 | 5.61 |
| 100 | 2.70 | 4.0E+05 | 1.93 | 4.8E+05 | 1.99 |
| 50 | 1.35 | 8.8E+05 | 1.58 | 2.5E+06 | 1.27 |
| 25 | 0.68 | 1.6E+06 | 1.32 | 5.0E+06 | 0.97 |
| 10 | 0.27 | 3.5E+06 | 0.99 | 8.8E+06 | 0.73 |
| 5 | 0.14 | 9.4E+06 | 0.55 | 1.3E+07 | 0.56 |
| 2.5 | 0.07 | 1.6E+07 | 0.32 | 3.2E+07 | 0.17 |
| 1 | 0.03 | 3.2E+07 | 0.03 | 2.8E+07 | 0.22 |
| 0 | 0.00 | 3.4E+07 | 0.01 | 4.7E+07 | (0.13) |
| Time 0 | | 3.5E+07 | 0.00 | 3.5E+07 | 0.00 |

The log reduction for the nisin concentrations was compared to the 0 IU/mL control after incubation.
The log reduction for the 0 IU/mL control was compared to the cell concentration at Time 0.
Buffer is 14.7mM KHPO$_4$, pH 6.0.
( ) = Increase.
Nisin had an activity of 3.7E+07 IU/gm.

Percentages in this application are, if not otherwise stated, percentages by weight.

**Claims**

1. A method of killing Gram negative bacteria, comprising:
   a. applying a composition, consisting of an effective activity of a purified lantibiotic and a buffer component capable of providing pH of between 5.5 and 6.5 when dissolved in water, to a surface suitable for growth of Gram negative food-borne pathogens or Gram negative spoilage organisms;
   b. thereby reducing the Gram negative population below detectable limits or by at least about three logarithms, with the proviso that the buffer component is not a citrate buffer.

2. The method of claim 1 wherein the purified lantibiotic is nisin obtained from a nisin preparation which is essentially devoid of sodium chloride and water insoluble components.

3. The method of claim 2, wherein the composition is an aqueous solution; and the aqueous solution is applied to a surface suspected of contamination by Gram negative food-borne pathogens or Gram negative spoilage organisms selected from the group consisting of <u>Samonella</u> <u>typhimurium</u>, <u>Samonella</u> <u>enteritidis</u>, <u>Shigella</u> <u>dysenteriae</u>, <u>Pseudomonas</u> <u>aeruginosa</u>, <u>Vibrio</u> <u>cholera</u>, <u>Klebsiella</u> <u>pneumoniae</u>, and <u>Escherichia</u> <u>coli</u>.

4. The method of claim 2 wherein the composition is an aqueous solution, and the aqueous solution is applied to a surface of food processing equipment suspected of contamination by Gram negative organisms, thereby disinfecting the equipment.

5. The method of claim 2 wherein the composition is an aqueous solution, and the aqueous solution is applied to freshly slaughtered poultry during processing, thereby killing Samonella present.

6. The method of claim 2 wherein the composition is an aqueous solution, and the aqueous solution is applied to the surfaces of vegetables, thereby reducing the contamination level below the detectable limits or by at least three logarithms.


**Patentansprüche**

1. Verfahren zum Abtöten gramnegativer Bakterien, umfassend
   a) das Aufbringen einer Zusammensetzung, die aus einer wirksamen Aktivität eines gereinigten Lantibiotikums und einem Pufferbestandteil besteht, der, wenn er in Wasser gelöst ist, einen pH zwischen 5,5 und 6,5 bereitzustellen vermag, auf eine Oberfläche, die für das Wachstum gramnegativer Krankheitserreger aus Nahrungsmitteln oder gramnegativer, Verderbnis bewirkender Organismen geeignet ist,
   b) und dadurch das Verringern der gramnegativen Population unter die Nachweisgrenze oder um wenigstens etwa drei Zehnerpotenzen, mit der Maßgabe, daß der Pufferbestandteil kein Citratpuffer ist.

2. Verfahren von Anspruch 1, bei welchem das gereinigte Lantibiotikum Nisin ist, das aus einer Nisinzubereitung erhalten wurde, welche im wesentlichen frei von Natriumchlorid und wasserunlöslichen Bestandteilen ist.

3. Verfahren von Anspruch 2, bei welchem die Zusammensetzung eine wäßrige Lösung ist und die wäßrige Lösung auf eine Oberfläche aufgebracht wird, die im Verdacht eines Befalls durch gramnegative Krankheitserreger aus Nahrungsmitteln oder gramnegative, Verderbnis bewirkende Organismen steht, welche aus der Gruppe ausgewählt sind, die aus *Salmonella typhimurium*, *Salmonella enteritidis*, *Shigella dysenteriae*, *Pseudomonas aeruginosa*, *Vibrio cholera*, *Klebsiella pneumoniae* und *Escherichia coli* besteht.

4. Verfahren von Anspruch 2, bei welchem die Zusammensetzung eine wäßrige Lösung ist und die wäßrige Lösung auf eine Oberfläche einer Anlage zur Lebensmittelverarbeitung aufgebracht wird, die im Verdacht eines Befalls durch gramnegative Organismen steht, wodurch die Anlage desinfiziert wird.

5. Verfahren von Anspruch 2, bei welchem die Zusammensetzung eine wäßrige Lösung ist und die wäßrige Lösung auf frisch geschlachtetes Geflügel während des Verarbeitens aufgebracht wird, wodurch die anwesenden Salmonellen abgetötet werden.

6. Verfahren von Anspruch 2, bei welchem die Zusammensetzung eine wäßrige Lösung ist und die wäßrige Lösung auf die Oberfläche von Gemüse aufgebracht wird, wodurch die Höhe des Befalls unter die Nachweisgrenze oder um wenigstens drei Zehnerpotenzen verringert wird.


**Revendications**

1. Procédé pour tuer des bactéries Gram négatives comprenant:
   a) l'application d'une composition, constituée d'un lantibiotique purifié d'une activité efficace et d'un composant tampon capable de fournir un pH entre 5,5 et 6,5 quand il est dissous dans de l'eau, à une surface adéquate pour la croissance des bactéries pathogènes Gram négatives rencontrées dans les aliments ou des organismes Gram négatifs des déchets;
   b) la réduction de la population Gram négative sous les limites détectables ou au moins d'environ trois logarithmes, avec la condition que le composant tampon n'est pas un tampon citrate.

2. Procédé selon la revendication 1, dans lequel le lantibiotique purifié est de la nisine obtenue à partir d'une préparation de nisine qui est essentiellement dépourvue de chlorure de sodium et de composants insolubles dans l'eau.

3. Procédé selon la revendication 2, dans lequel la composition est une solution aqueuse; et la solution aqueuse est appliquée à une surface suspecte de contamination par des bactéries pathogènes Gram négatives rencontrées dans des aliments ou des organismes Gram négatifs des déchets choisis parmi le groupe constitué par Salmonella typhimurium, Salmonella enteritidis, Shigella dysenteriae, Pseudomonas aeruginosa, Vibrio cholera, Klebsiella pneumoniae et Escherichia coli.

4. Procédé selon la revendication 2, dans lequel la composition est une solution aqueuse, et la solution aqueuse est appliquée à une surface d'installation de traitement des aliments, suspecte de contamination par des organismes Gram négatifs, en désinfectant ainsi l'installation.

5. Procédé selon la revendication 2, dans lequel la composition est une solution aqueuse, et la solution aqueuse est appliquée à de la volaille fraichement abattue durant le traitement, en tuant ainsi les Salmonella présentes.

6. Procédé selon la revendication 2, dans lequel la composition est une solution aqueuse, et la solution aqueuse est appliquée à la surface des légumes, amenant par ce moyen le niveau de contamination sous des limites détectables ou le réduisant d'au moins trois logarithmes.